# EUROPEAN PATENT APPLICATION

(11) **EP 0 872 525 A1**
(43) Date of publication of application: **21.10.1998**
(21) Application number: 98302972.9
(22) Date of filing: 15.04.1998
(51) Int. Cl.: C09D 5/00, C09D 5/22, C09K 11/02, B05D 5/06, E01C 23/20, E01F 9/04

(54) **Road marking**

(30) Priority: 19.04.1997 GB 9707963
(71) Applicant: Product 2000 Limited, Fordingbridge, Hampshire SP6 1NQ (GB)
(72) Inventor: Barry, Mark Aubrey, c/o Product 2000 Limited, Fordingbridge, Hampshire SP6 1NQ (GB)
(74) Representative: Boutland, John Anthony

(57) **Abstract**

A method of producing a road marking onto a base layer of a road surface comprises applying a mixture of transparent elements and luminescent material to the upper surface, at least, of the base layer, the upper surface being tacky, the mixture being discharged onto the tacky surface of the base layer.

The mixture may be discharged onto the base layer by sprinkling or by spraying.

The transparent elements are preferably retro-reflective, and may comprise glass beads.

The luminescent material may comprise fluorescent and/or phosphorescent material,

The luminescent material may comprise a mixture of copper sulphide (CuS) and zinc sulphide (ZnS).

The base layer is preferably a layer of a thermoplastic material, the surface of which may be heated so that it becomes tacky.

## Description

The present invention relates to road marking and to methods of producing the same.

We consider that it would be desirable in certain situations to provide a road marking material having a luminescent property.

Luminescence is defined as the emission of light from a body from any cause other than high temperature. Fluorescence and phosphorescence are particular cases of luminescence. Phosphorescence occurs when a substance emits light of one wavelength after having absorbed electromagnetic radiation of a shorter wavelength.

Unlike fluorescence, phosphorescence may continue for a considerable time after excitation.

The term 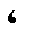 road 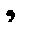 is used herein to include a car park, driveway, pavement, aircraft runway, warehouse or workshop floor, or like surface.

As is well known, road markings are generally designed to be retro-reflective to a greater or lesser degree. That is, the road marking will reflect a significant proportion of incident light in a direction back towards the source of light.

The retro-reflective property is usually provided by incorporating glass beads into the surface of the marking material. In order to cater for wear of the thermoplastic paint that is usually employed as the body of the marking material, glass beads are usually also mixed in with the thermoplastic material.

Such retro-reflective road markings have the property that at night they show up only where they are being illuminated by a vehicle 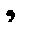 s head lamps, and because they are designed to reflect the light back towards the vehicle that is providing the source of light, the illuminated road markings are generally only noticeable to the occupants of the illuminating vehicle.
US-A-5472737 refers to a method of producing marking onto a road surface, comprising applying a paint mixture of transparent elements and luminescent material onto the road surface.

We believe that it would be desirable to provide a road marking that is both retro-reflective and which has a luminescent property.

According to one aspect of the present invention, a method of producing a marking onto a base layer of a road surface, comprises applying a mixture of transparent elements and luminescent material to the upper surface, at least, of the base layer, characterised in that the upper surface is tacky, and the mixture is discharged onto the tacky upper surface of the base layer.

The mixture may be discharged by sprinkling or by spraying.

As used herein, the term 'transparent' includes 'translucent'.

The luminescent material preferably comprises a powder and is therefore particulate.

The base layer is preferably a layer of a thermoplastic material, the surface of which may be heated so that it becomes tacky.

An alternative tacky material comprises a chlorinated rubber paint.

By "tacky", we do not mean material which remains sticky or tacky for long after the mixture has been discharged thereon.

The transparent elements are preferably retro-reflective.

Under suitable conditions, the mixture of elements and powder will adhere to the surface of the base layer.

The luminescent material may comprise fluorescent and/or phosphorescent material. Phosphorescent material has the ability to provide a reflective "glow" in daylight.

The luminescent material is preferably a mixture of copper sulphide ( CuS) and zinc sulphide (ZnS) but any suitable luminescent material may be used. Such material has the property of absorbing light energy, and then emitting low-level light for a period of time, usefully for about 30 minutes.

It is believed that the principal active luminescent agent is provided by luminescent material trapped between the transparent elements and the base layer. Such particles are not only trapped in position but are protected from abrasion by the presence of the transparent elements.
When the luminescent material is of a high (say 5gms/cm³) density, the material preferably comprises luminescent material of relatively low (say 0.3gms/cm³) density, so as to reduce the overall density of the luminescent material, thereby to assist in mixing with the transparent elements. Said relatively low density material may be in the form of a fine dusting powder, such as silica dust, or Wollastonite.

Wollastonite also acts as a whitener which assists in counteracting any greying effect of UV light on the luminescent material.

According to a second aspect of the invention, a road marking is produced by the method according to the above mentioned first aspect of the invention.

An example of producing a road marking in accordance with the invention will now be described by way of example only.

A suitable grade of glass bead is chosen. Conventionally glass beads used for road marking have a diameter in the range 50µm to 500µm, with the main concentration being around 300µm. Such glass beads are used in the present example, although glass rods and/or glass powder are alternatives.

A powder was produced by mixing copper and zinc sulphide particles of up to 100 µm with a substantially equal volume of a silica dusting powder. The resulting powder was then added, 15% by weight, to the glass beads, and the mixture was stirred, so as to coat the glass beads with the powder.

Alternatively, a suitable ready-mixed copper sulphide/zinc sulphide luminescent material may be used. Such material is marketed as 'H2 Series' by the Glowbug Division of Capricorn Chemicals Limited, Ely, Cambridgeshire, England.

The resulting mixture is sprinkled onto the heated surface of a thermoplastic layer of conventional road marking 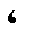 paint 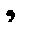 , to cause the mixture to adhere to the upper surface of the paint. Heating of the thermoplastic material may be achieved by raising its temperature in a boiler, using a gas flame.

The resultant road marking is expected to emit low-level light for about thirty minutes after absorbing light energy for five seconds.

Other aspects of the invention dispense with the use of transparent elements. Thus, according to a third aspect of the invention, a method of producing a road marking comprises applying luminescent material to the surface of a base layer that has already been laid down on the road surface.

Similarly, according to a fourth aspect of the invention, a road marking comprises a base layer adhered to the road, the upper surface, at least, of the base layer having applied thereto a luminescent material.

Here, the base layer is applied to the road surface and the luminescent material applied to the base layer. This may be done, for example, by applying to the base layer a mixture of, say, 20% by weight of luminescent material and small pieces (chips) of a polymer material such as polythene. The polymer material serves as a filler and as protection from abrasion. Application of the mixture may comprise sprinkling the same on to the base layer.

The invention also comprises the use of a second or subsidiary tacky layer, applied to the surface of the base layer; a second mixture of transparent elements and luminescent material is then discharged on to the tacky upper surface of the second layer.

The invention further comprises the use of a tacky base layer, applied to an existing road marking, and then discharging a mixture of transparent elements and luminescent material on to the tacky upper surface of the base layer, so as to enhance the existing road marking.

## Claims

1. A method of producing a marking onto a base layer of a road surface, comprising applying a mixture of transparent elements and luminescent material to the upper surface, at least, of the base layer, characterised in that the upper surface is tacky, and the mixture is discharged onto the tacky upper surface of the base layer.

2. The method of claim 1, wherein the base layer is inherently tacky.

3. The method of claim 1, wherein the base layer is of heated thermoplastics material.

4. The method of claim 2, wherein the base layer comprises a chlorinated rubber paint.

5. The method of any one of claims 1 to 4, wherein discharge of the mixture comprises sprinkling the same.

6. The method of any one of claims 1 to 4, wherein discharge of the mixture comprises spraying the same.

7. The method of any one of claims 1 to 7, wherein the luminescent material is a particulate material.

8. The method of claim 7, wherein the particulate luminescent material comprises copper sulphide.

9. The method of claim 7 or 8, wherein the particulate luminescent material comprises a mixture including zinc sulphide.

10. The method of claim 7, wherein the luminescent material is a particulate material comprising copper sulphate and/or zinc sulphide.

11. The method of any one of claims 1 to 10, wherein the transparent material provides retro-reflective means.

12. The method of any one of claims 1 to 11, wherein the transparent material comprises glass elements.

13. The method of any one of claims 1 to 12, wherein the luminescent materials trapped, at least in part, between the transparent material and the base layer.

14. The method of any one of claims 1 to 13, wherein the luminescent material is a high density material.

15. The method of claim 14, wherein the luminescent material is a high density material of 5 gms/cm³.

16. The method of any one of claims 1 to 14, wherein the luminescent material is a low density material.

17. The method of claim 16, wherein the luminescent material is a low density material of 0.3 gms/cm³.

18. The method of any one of the preceding claims, wherein the luminescent material comprises particles of up to 100 um.

19. The method of any one of claims 1 to 18, wherein the luminescent material comprises fluorescent and/or phosphorescent materials.

20. The method of any one of claims 1 to 19, applied to an existing road marking so as to enhance the same.

21. The method of any one of the preceding claims, characterised in that a second tacky layer is applied to said base layer and to the mixture discharged onto, and a second mixture of transparent elements and luminescent material is then discharged on to the tacky upper surface of said second layer.

22. The method of claim 21, wherein the features of any one of claims 1 to 20, either singly or in combination, are possessed by said second layer and/or said second mixture.

23. A road marking produced by the method claimed in any one of claims 1 to 22.

24. A road marking as claimed in claim 23, wherein, in use, the road marking emits low-level light for about 30 minutes after absorbing light energy for 5 seconds.

25. A method of producing a road marking as claimed in any one of claims 1 to 22, substantially as herein described.

26. A road marking as claimed in claims 23 or 24, substantially as herein described.
